# EUROPEAN PATENT SPECIFICATION

(11) **EP 3 758 308 B1**
(45) Date of publication and mention of the grant of the patent: **07.06.2023**
(21) Application number: 19756713.4
(22) Date of filing: 21.01.2019
(51) Int. Cl.: H04L 51/046, H04L 51/48, H04L 51/58

(54) **CORRESPONDENCE PROCESSING METHOD AND DEVICE BASED ON INTERWORKING RCS SYSTEM**
VERFAHREN UND VORRICHTUNG ZUR KORRESPONDENZVERARBEITUNG BASIEREND AUF EINEM RCS-SYSTEM ZUR ZUSAMMENARBEIT
PROCÉDÉ ET DISPOSITIF DE TRAITEMENT DE CORRESPONDANCE BASÉS SUR UN SYSTÈME DE RCS EN INTERFONCTIONNEMENT

(30) Priority: 26.02.2018 CN 201810162811
(43) Date of publication of application: 30.12.2020
(73) Proprietor: ZTE Corporation, Shenzhen, Guangdong 518057 (CN)
(72) Inventor: AN, Shaohui, Shenzhen, Guangdong 518057 (CN); HUANG, Xiaobing, Shenzhen, Guangdong 518057 (CN); SUN, Libo, Shenzhen, Guangdong 518057 (CN); YANG, Jinzhou, Shenzhen, Guangdong 518057 (CN); CAO, Yijun, Shenzhen, Guangdong 518057 (CN); KONG, Yaqing, Shenzhen, Guangdong 518057 (CN); LI, Shangjing, Shenzhen, Guangdong 518057 (CN); XU, Ying, Shenzhen, Guangdong 518057 (CN)
(74) Representative: WBH Wachenhausen Patentanwälte PartG mbB
(86) International application number: PCT/CN2019/072505
(87) International publication number: WO 2019/161721

(56) References cited:
- EP-A1- 3 136 682
- CN-A- 104 994 083
- US-A1- 2014 134 978

## Description

### TECHNICAL FIELD

The present invention relates to the field of wireless communications, in particular to a correspondence processing method and device based on an interworking RCS system.

### BACKGROUND

A RCS (Rich Communication Suite) system includes an IMS (IP multimedia subsystem) access module, an Instant Message AS (Application Server), a group chat AS and a call module. The IMS access module is responsible for authenticating and accessing of users, the Instant message AS is responsible for sending and receiving peer-to-peer messages between users, and the group chat AS is responsible for processing group Initiation requests from a home network, processing group chat messages, and saving group list information created by the users of the home network, so that the users of the home network can acquire the group list information by subscribing to a group list from the group chat AS of the home network.

As global service providers deploy more and more RCS systems, there are more and more RCS interconnections between service providers. When RCS services of different service providers are interconnected, users of an external network may be invited to join a group chat of the home network, and users of the home network may be invited to join an RCS group chat of other service providers as well.

At present, because the home network group chat AS only saves the group list information of the home network, that is, the identity correspondence between users of the home network and groups of the home network, the RCS system that is interconnected by service providers is unable to manage the correspondence between the users of home networks and group chat in RCS systems of other service providers.

The document EP 3136682 A1 discloses methods and systems for enabling interworking between RCS and non RCS networks in a completely seamless and transparent manner in which there will be no need to update or develop a new RCS end device or a client software and still achieving the interworking with non RCS networks only by network specific deployments and configurations. Proposed systems and methods shall extend all the RCS services to the non RCS contacts of the RCS users (subject to subscription to particular non RCS network that offers RCS kind of services) retaining the end client devices or end client applications used both by the RCS user and non RCS user.

### SUMMARY

Embodiments of the present invention provide a group list processing method and device based on an interworking RCS system, to at least solve the problem in existing technology that in a RCS system that is interconnected by service providers, users of a home network are unable to acquire group list information in RCS systems of other service providers.

According to the present invention, a correspondence processing method based on an interworking RCS system is provided, the method includes: determining that a user of RCS system of home network agrees to join an external network group chat of RCS system of external network, wherein a domain name of a network where the external network group chat is located is not consistent with a domain name of a network where the user is located; saving a correspondence between the user and the external network group chat.

In some embodiments, the saving a correspondence between the user and the external network group chat includes: creating an external network group list for storing the correspondence between the user and the external network group chat.

In some embodiments, saving attribute information about the external network group chat having correspondence with the user, wherein the attribute information includes at least one of member information about the external network group chat, or group name information about the external network group chat, or announcement information about the external network group chat, or chat records in the external network group chat.

In some embodiments, in response to the attribute information about the external network group chat being changed, saving the changed attribute information about the external network group chat.

In some embodiments, deleting the correspondence between the user and the external network group chat in response to one of the following situations: the external network group chat is release; or the user leave from the external network group chat; or the user is removed from the external network group chat.

In some embodiments, receiving a group list subscription message; and sending a group list to be queried to the user, wherein the group list to be queried includes the external network group list.

In some embodiments, before sending the group list to be queried to the user, acquiring a home network group list; and merging the home network group list with the external network group list into the group list to be queried.

According to another aspect of the present invention, a correspondence processing device based on an interworking RCS system is provided, the device includes: a data processing module configured to determine that a user of RCS system of home network agrees to join an external network group chat of RCS system of external network, wherein a domain name of a network where the external network group chat is located is not consistent with a domain name of a network where the user is located; and a storage module configured to store the correspondence between the user and the external network group chat.

According to yet another embodiment of the present invention, a computer-readable storage medium having a correspondence processing program based on an interworking RCS system stored therein is provided, when the correspondence processing program based on an interworking RCS system is executed by a processor, the steps of the group list processing method of any one from above are performed.

According to yet another embodiment of the present invention, a processor configured to run a program is provided, wherein the method of any one from above is executed when the program runs.

According to the present invention, because it is possible to extract and compare a domain name of a home network where a user is located and a domain name of an external network group which sends an invitation to join a group, extract information that a user of the home network joins an external network group chat, save a correspondence between the user of the home network and the external network group chat, and save a correspondence between identity information about the user of the home network and identity information about the external network group chat, the problem in existing technology in which the RCS system that is interconnected by service providers is unable to process group lists of a user of the home network in RCS systems of other service providers is solved.

### BRIEF DESCRIPTION OF DRAWINGS

The accompanying drawings described herein are intended to provide a further understanding of the present invention and form part of the present invention, and schematic embodiments of the present invention and the description thereof are intended to explain the present invention and do not constitute an improper limitation on the present invention. In the drawings:
Fig. 1 is a flowchart of a correspondence processing method provided according to an embodiment of the present invention;
Fig. 2 is a procedure chart of the correspondence processing method according to an embodiment of the present invention;
Fig. 3 is a procedure chart of processing the correspondence between a user and an external network group chat when the external network group chat is changed according to an optional example of the present invention;
Fig. 4 is a procedure chart of processing the correspondence between a user and an external network group chat when a group leader of the external network group chat removes the user of the home network according to an optional example of the present invention;
Fig. 5 is a procedure chart of processing the correspondence between a user and an external network group chat when the external network group chat is release according to an optional example of the present invention;
Fig. 6 is a procedure chart of processing the correspondence between a user and an external network group chat when the user of the home network leaves from the external network group chat according to an optional example of the present invention;
Fig. 7 is a procedure chart of processing the correspondence between a user and an external network group chat when the user of the home network subscribes to a group list according to an optional example of the present invention; and
Fig. 8 is a structural schematic diagram of a group list management device provided according to an embodiment of the present invention.

### DETAILED DESCRIPTION

The present invention will be described in detail below with reference to the accompanying drawings and in conjunction with embodiments. It should be noted that, in the case of no conflict, the embodiments in the present invention and the features in the embodiments may be combined with each other.

It should be noted that the terms "first", "second" and the like in the description and claims of the present invention and the drawings are used to distinguish similar objects, and do not have to be used to describe a specific order or sequence.

### Embodiment 1

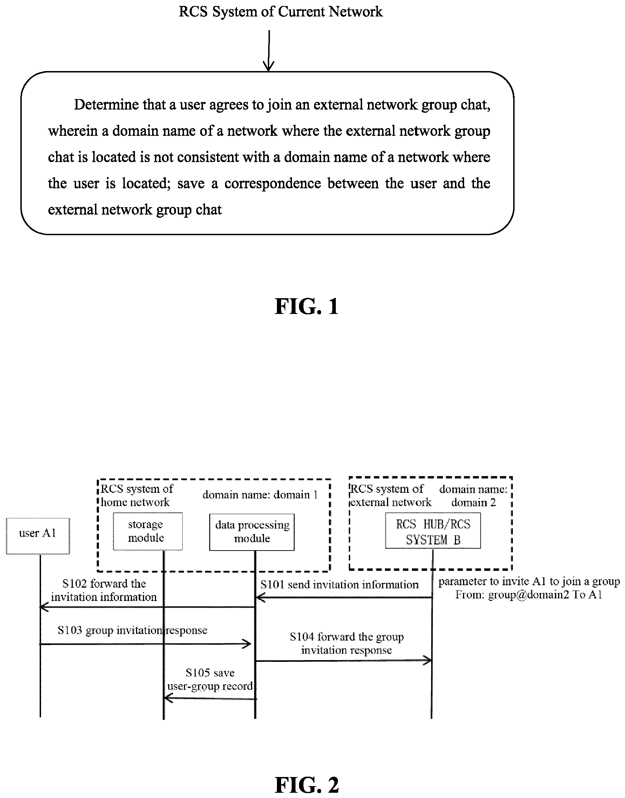

In this embodiment, a correspondence processing method and device based on an interworking RCS system is provided. Fig. 1 is a flowchart according to an embodiment of the present invention.

The method includes: determining that a user agrees to join an external network group chat, wherein a domain name of a network where the external network group chat is located is not consistent with a domain name of a network where the user is located; saving a correspondence between the user and the external network group chat.

Fig. 2 is a procedure chart of the correspondence processing method according to an embodiment of the present invention. Specifically, the procedure as shown includes the following steps.

At S101, sending, by an external network group group@domain2, invitation information to a user A1 of a home network through an RCS system of the home network.

At S102, forwarding, by the RCS system of the home network, the invitation information to the user A1 of the home network.

At S103, returning, by the user A1, a response confirming to join the group to the RCS system of the home network.

At S104, forwarding, by the RCS system of the home network, the response confirming to join the group of the user A1 to the external network group.

The RCS system of the home network may use an Instant Message AS of the home network to send the invitation information to the user A1 of the home network. The RCS system of the home network obtains a domain name of the group according to a 'from' field of the invitation information, and judges that the domain name of the group is domain2, which is different from the domain name domain1 of the home network, and the RCS system of the home network may also judge that the domain name of the group is different from the domain name of the home network according to a response message of the invitation information.

The RCS system of the home network may use the Instant Message AS of the home network to compare the domain name of the group with the domain name of the home network.

At S 105, when the response message of the user is to agree to join, creating an external network group list to save a correspondence between the identity information about the user A1 and the identity information about the group domain group @ domain2 and group information about the external network group chat having correspondence with the user, including member information about the external network group chat, group name information about the external network group chat, notify information about the external network group chat, and chat records in the external network group chat.

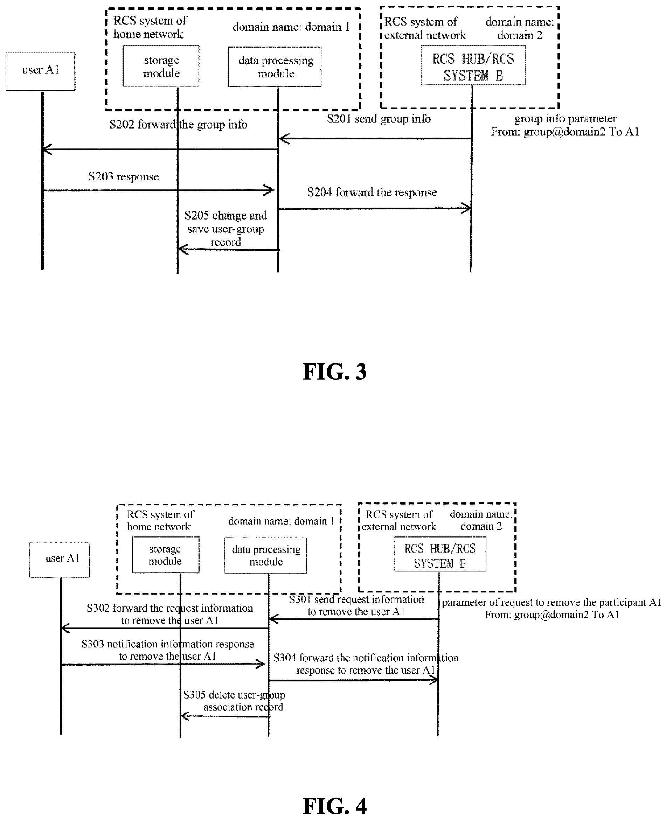

When the group information about the external network group chat is changed, the changed attribute information about the external network group chat is saved. The procedure is shown in Fig. 3 and specifically includes the following steps.

At S201, sending, by an external network group group@domain2, group chat change notification information to a user A1 of a home network through an RCS system of the home network.

At S202, forwarding, by the RCS system of the home network, the group chat change notification information to the user A1 of the home network.
wherein the RCS system of the home network may use the Instant Message AS of the home network to send the group chat change notification information to the user A1 of the home network.

At S203, returning, by the user A1 of the home network, a group chat notification response to the RCS system of the home network.

At S204, returning, by the RCS system of the home network, the group chat notification response to the external network group chat.

Obtaining, by the RCS system of the home network, a domain name of the group according to a 'from' field of a group chat notification information, and judging that the domain name of the group is domain2, which is different from the domain name domain1 of the home network; alternatively, judging, by the RCS system of the home network, that the domain name of the group is different from the domain name of the home network according to the group chat notification response information.

The RCS system of the home network may use the Instant Message AS of the home network to compare the domain name of the group with the domain name of the home network.

At S205, changing, by the RCS system of the home network, the correspondence between the identity information about the user A1 and the identity information about the group chat group @ domain2 in the external network group list according to the change information, and saving the correspondence.

When the external network group needs to remove the user A1 of the home network, the correspondence between the user and the external network group chat is deleted. The procedure is shown in Fig. 4 and specifically includes the following steps.

At S301, sending, by a group leader of the external network group group@domain2, removal information to the user A1 of the home network through the RCS system of the home network.

At S302, forwarding, by the RCS system of the home network, the removal information to the user A1 of the home network.

At S303, sending, by the user A1 of the home network, a notification information response to remove the user A1 to the RCS system of the home network.

At S304, returning, by the RCS system of the home network, the notification information response to remove the user A1 to the external network group chat.

At S305, obtaining, by the RCS system of the home network, a domain name of the group according to a 'from' field of the removal information, and judging that the domain name of the group is domain2, which is different from the domain name domain1 of the home network; alternatively, judging that the domain name of the home network is different from the domain name of the external network group according to the domain name fields of the home network and the external network in the notification information response to remove the user A1 sent by the user A1 of the home network.

The RCS system of the home network may use the Instant message AS of the home network to compare the domain name of the group with the domain name of the home network.

The RCS system of the home network may use the Instant Message AS to send the removal information to the user A1 of the home network.

Deleting the correspondence between the identity information about the user A1 and the identity information about the group chat group @ domain2 in the external network group list, updating and saving the external network group list.

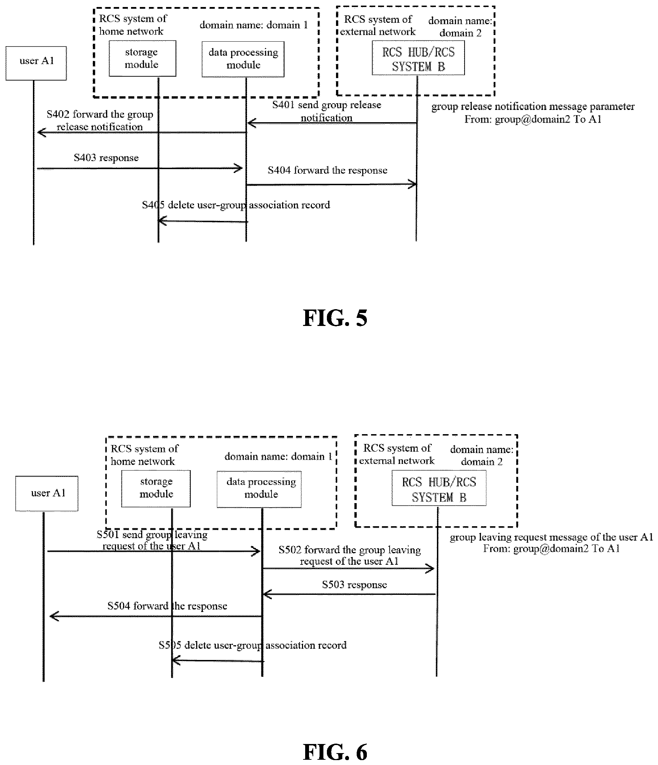

When the external network group chat is released, the correspondence between the user and the external network group chat is deleted. The procedure is shown in Fig. 5 and specifically includes the following steps.

At S401, sending, by a group leader of the external network group group@domain2, release information to the user A1 of the home network through the RCS system of the home network.

At S402, forwarding, by the RCS system of the home network, the group release request to the user A1 of the home network.

At S403, sending, by the user A1 of the home network, a group release response to the RCS system of the home network.

At S404, returning, by the RCS system of the home network, the group release response to the external network group chat.

At S405, obtaining, by the RCS system of the home network, a domain name of the group according to a 'from' field of the dissolution information, and judging that the domain name of the group is domain2, which is different from the domain name domain1 of the home network; alternatively, judging that the domain name of the home network is different from the domain name of the external network group according to the domain name fields of the home network and the external network in the group release response sent by the user A1 of the home network.

The RCS system of the home network may use the Instant Message AS of the home network to compare the domain name of the group with the domain name of the home network.

The RCS system of the home network may use the Instant Message AS to send the group release request to the user A1 of the home network.

Deleting the correspondence between the identity information about the user A1 and the identity information about the group chat group @ domain2 in the external network group list, and updating and saving the external network group list.

When the user A1 of the home network needs to leave from the external network group group@domain2 to which a connection is established, the correspondence between the user and the external network group chat is deleted. The procedure is shown in Fig. 6 and specifically includes the following steps.
At S501, sending, by the user A1 of the home network, group leaving request information to the external network group group@domain2 through the RCS system of the home network;
At S502, forwarding, by the RCS system of the home network, the group leaving request information to the external network group group @ domain2;
At S503, sending, by the external network group group@domain2, a group leaving response to the RCS system of the home network;
At S504, forwarding, by the RCS system of the home network, the group leaving response to the user A1 of the home network;
At S505, obtaining, by the RCS system of the home network, a domain name of the group according to a 'from' field of a user request message, and judging that the domain name of the group is domain2, which is different from the domain name domain1 of the home network; alternatively, judging that the domain name of the home network is different from the domain name of the external network group according to the domain name fields of the home network and the external network according to the group withdraw request information response sent by the external network group;
The RCS system of the home network may use the Instant Message AS of the home network to compare the domain name of the group with the domain name of the home network;

The RCS system of the home network may use the Instant Message AS to send the group leaving request information from the user A1 of the home network.

Deleting the correspondence between the identity information about the user A1 and the identity information about the group chat group @ domain2 in the external network group list, and updating and saving the external network group list.

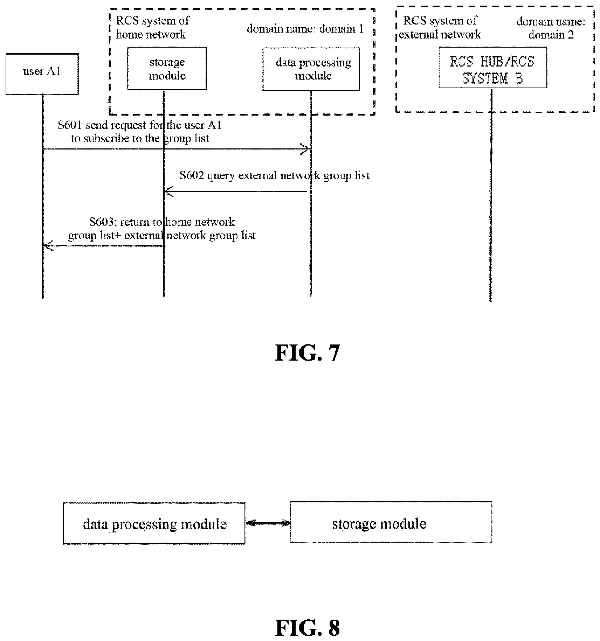

When the user A1 of the home network needs to subscribe to the group list, a group list subscription message is received, and a group list to be queried is sent to the user, the group list to be queried includes the external network group list. The procedure is shown in Fig. 7 and specifically includes the following steps.
At S601, sending, by the user A1 of the home network, group list subscription information to the RCS system of the home network;

At S602, querying, by a group AS of the home network, to acquire the external network group list at which A1 is located.

At S603, merging, by the RCS system of the home network, a home network group list with the external network group list at which A1 is located, to obtain a group list saving the correspondence between the user and the home network group chat and the correspondence between user and the external network group chat, and returning the group list to the user A1.

### Embodiment 2:

This embodiment further provides a correspondence processing device based on an interworking RCS system. The device is configured to realize the above-mentioned embodiments and best modes, and those already described will not be described again. As used below, the term "module" may be a combination of software and/or hardware that implements a predetermined function. Although the device described in the following embodiments is preferably implemented in software, the implementation of hardware, or a combination of software and hardware, is also possible and contemplated.

Fig. 8 is a structural block diagram of the management device for external network group list information according to embodiments of the present invention, as shown in fig. 8, the device includes a data processing module and a storage module.

The data processing module is configured to determine that a user agrees to join an external network group chat, wherein a domain name of a network where the external network group chat is located is not consistent with a domain name of a network where the user is located.

The storage module is configured to store a correspondence between the user and the external network group chat.

The device may be deployed independently, also it may be combined with the group AS of the home network. The device may be managed by a GM (Group Management Module) managing the home network group list.

It should be noted that the above various modules may be realized by software or hardware, and the latter may be realized by the following ways, but not limited to this: the above modules are all located in the same processor; alternatively, the above modules are located in different processors in any combination.

In the drawings of the specification, the message interface module and the service processing module are combined. In practical application, the three modules may be combined for networking at random.

The above are only preferred embodiments of the present invention, and is not intended to limit the scope of protection of the present invention.

To sum up, in embodiments of the present invention, by extracting the interactive information between user and the group chat, determining whether to be in a service provider interconnection state or not, and saving the correspondence between the identity information about the user of the home network and the identity information about the external network group chat, the problem in existing technology in which the RCS system that is interconnected by service providers is unable to manage group lists of users of home networks in RCS systems of other service providers can be solved.

## Claims

1. A correspondence processing method based on an interworking RCS system, **characterized in that**, the method comprises:
determining that a user of RCS system of home network agrees to join an external network group chat of RCS system of external network, wherein a domain name of a network where the external network group chat is located is not consistent with a domain name of a network where the user is located; and
saving a correspondence between the user and the external network group chat.

2. The method of claim 1, wherein the saving a correspondence between the user and the external network group chat comprises:
creating an external network group list for storing the correspondence between the user and the external network group chat.

3. The method of claim 1 or 2, further comprising:
saving attribute information about the external network group chat having correspondence with the user, wherein the attribute information comprises at least one of member information about the external network group chat, or group name information about the external network group chat, or announcement information about the external network group chat, or chat records in the external network group chat.

4. The method of claim 3, further comprising:
in response to the attribute information about the external network group chat being changed, saving the changed attribute information about the external network group chat.

5. The method of claim 1, further comprising:
deleting the correspondence between the user and the external network group chat in response to one of the following situations:
the external network group chat is released; or
the user leaves from the external network group chat; or
the user is removed from the external network group chat.

6. The method of claim 2, further comprising:
receiving a group list subscription message; and
sending a group list to be queried to the user, wherein the group list to be queried comprises the external network group list.

7. The method of claim 1, further comprising: before sending the group list to be queried to the user,
acquiring a home network group list; and
merging the home network group list with the external network group list into the group list to be queried.

8. A correspondence processing device based on an interworking RCS system, **characterized in that**, the system comprises:
a data processing module configured to determine that a user of RCS system of home network agrees to join an external network group chat of RCS system of external network, wherein a domain name of a network where the external network group chat is located is not consistent with a domain name of a network where the user is located; and
a storage module configured to store the correspondence between the user and the external network group chat.

9. A computer-readable storage medium having a correspondence processing program based on an interworking RCS system stored therein, **characterized in that**, when the correspondence processing program based on an interworking RCS system is executed by a processor, the steps of the group list processing method of any one of claims 1 to 7 are performed.

10. A processor configured to run a program stored in the computer readable storage medium of claim 9, **characterized in that**, the method of any one of claims 1-7 is executed when the program runs.

## Patentansprüche

1. Korrespondenzverarbeitungsverfahren basierend auf einem Zusammenarbeits-RCS-System, **dadurch gekennzeichnet, dass** das Verfahren Folgendes umfasst:
Bestimmen, dass ein Benutzer eines RCS-Systems eines Home-Netzwerks einwilligt, einem externen Netzwerkgruppenchat eines RCS-Systems eines externen Netzwerks beizutreten, wobei ein Domänenname eines Netzwerks, in dem sich der externe Netzwerkgruppenchat befindet, nicht mit einem Domänennamen eines Netzwerks, in dem sich der Benutzer befindet, übereinstimmt; und
Sichern einer Korrespondenz zwischen dem Benutzer und dem externen Netzwerkgruppenchat.

2. Verfahren nach Anspruch 1, wobei das Sichern einer Korrespondenz zwischen dem Benutzer und dem externen Netzwerkgruppenchat Folgendes umfasst:
Erstellen einer externen Netzwerkgruppenliste zum Speichern der Korrespondenz zwischen dem Benutzer und dem externen Netzwerkgruppenchat.

3. Verfahren nach Anspruch 1 oder 2, das ferner Folgendes umfasst:
Sichern von Attributinformationen über den externen Netzwerkgruppenchat, der eine Korrespondenz mit dem Benutzer hat, wobei die Attributinformationen Mitgliedsinformationen über den externen Netzwerkgruppenchat und/oder Gruppennameninformationen über den externen Netzwerkgruppenchat und/oder Ankündigungsinformationen über den externen Netzwerkgruppenchat und/oder Chataufzeichnungen in dem externen Netzwerkgruppenchat umfassen.

4. Verfahren nach Anspruch 3, das ferner Folgendes umfasst:
als Reaktion darauf, dass die Attributinformationen über den externen Netzwerkgruppenchat geändert werden, Sichern der geänderten Attributinformationen über den externen Netzwerkgruppenchat.

5. Verfahren nach Anspruch 1, das ferner Folgendes umfasst:
Löschen der Korrespondenz zwischen dem Benutzer und dem externen Netzwerkgruppenchat als Reaktion auf eine der folgenden Situationen:
der externe Netzwerkgruppenchat wird freigegeben; oder
der Benutzer verlässt den externen Netzwerkgruppenchat; oder
der Benutzer wird aus dem externen Netzwerkgruppenchat entfernt.

6. Verfahren nach Anspruch 2, das ferner Folgendes umfasst:
Empfangen einer Gruppenlistensubskriptionsnachricht; und
Senden einer abzufragenden Gruppenliste an den Benutzer, wobei die abzufragende Gruppenliste die externe Netzwerkgruppenliste umfasst.

7. Verfahren nach Anspruch 1, das ferner Folgendes umfasst: vor dem Senden der abzufragenden Gruppenliste an den Benutzer,
Erfassen einer Home-Netzwerkgruppenliste; und
Zusammenführen der Home-Netzwerkgruppenliste mit der externen Netzwerkgruppenliste in die abzufragende Gruppenliste.

8. Korrespondenzverarbeitungsvorrichtung basierend auf einem Zusammenarbeits-RCS-System, **dadurch gekennzeichnet, dass** die Vorrichtung Folgendes umfasst:
ein Datenverarbeitungsmodul, ausgelegt zum Bestimmen, dass ein Benutzer eines RCS-Systems eines Home-Netzwerks einwilligt, einem externen Netzwerkgruppenchat eines RCS-Systems eines externen Netzwerks beizutreten, wobei ein Domänenname eines Netzwerks, in dem sich der externe Netzwerkgruppenchat befindet, nicht mit einem Domänennamen eines Netzwerks, in dem sich der Benutzer befindet, übereinstimmt; und
ein Speichermodul, ausgelegt zum Speichern der Korrespondenz zwischen dem Benutzer und dem externen Netzwerkgruppenchat.

9. Computerlesbares Speichermedium mit einem darin gespeichertem Korrespondenzverarbeitungsprogramm basierend auf einem Zusammenarbeits-RCS-System, **dadurch gekennzeichnet, dass** bei Ausführung des Korrespondenzverarbeitungsprogramms basierend auf einem Zusammenarbeits-RCS-System durch einen Prozessor die Schritte des Gruppenlistenverarbeitungsverfahrens nach einem der Ansprüche 1 bis 7 durchgeführt werden.

10. Prozessor, ausgelegt zum Ausführen eines in dem computerlesbaren Speichermedium nach Anspruch 9 gespeicherten Programms, **dadurch gekennzeichnet, dass** das Verfahren nach einem der Ansprüche 1-7 ausgeführt wird, wenn das Programm ausgeführt wird.

## Revendications

1. Procédé de traitement de correspondance basé sur un système RCS en interfonctionnement, **caractérisé en ce que** le procédé comprend les étapes suivantes :
déterminer qu'un utilisateur d'un système RCS d'un réseau domestique accepte de rejoindre un groupe de discussion de réseau externe d'un système RCS de réseau externe, où le nom de domaine d'un réseau où se trouve le groupe de discussion de réseau externe n'est pas cohérent avec le nom de domaine du réseau où se trouve l'utilisateur ; et
enregistrer une correspondance entre l'utilisateur et le groupe de discussion de réseau externe.

2. Procédé selon la revendication 1, dans lequel l'enregistrement d'une correspondance entre l'utilisateur et le groupe de discussion de réseau externe comprend :
la création d'une liste de groupes de réseau externe pour stocker la correspondance entre l'utilisateur et le groupe de discussion de réseau externe.

3. Procédé selon la revendication 1 ou la revendication 2, comprenant en outre l'étape suivante :
enregistrer les informations d'attribut sur le groupe de discussion de réseau externe ayant une correspondance avec l'utilisateur, les informations d'attribut comprenant au moins des informations parmi les suivantes : des informations de membre relatives au groupe de discussion de réseau externe, des informations de nom de groupe relatives au groupe de discussion de réseau externe, des informations d'annonce relatives au groupe de discussion de réseau externe ou des enregistrements de discussion dans le groupe de discussion de réseau externe.

4. Procédé selon la revendication 3, comprenant en outre l'étape suivante :
en réponse à un changement des informations d'attribut relatives au groupe de discussion de réseau externe, enregistrer les informations d'attribut modifiées relatives au groupe de discussion de réseau externe.

5. Procédé selon la revendication 1, comprenant en outre l'étape suivante :
supprimer la correspondance entre l'utilisateur et le groupe de discussion de réseau externe en réponse à l'une des situations suivantes :
le groupe de discussion de réseau externe est libéré ; ou
l'utilisateur quitte le groupe de discussion de réseau externe ; ou
l'utilisateur est retiré du groupe de discussion de réseau externe.

6. Procédé selon la revendication 2, comprenant en outre l'étape suivante :
recevoir un message d'abonnement à une liste de groupes ; et
envoyer à l'utilisateur une liste de groupes à interroger, la liste de groupes à interroger comprenant la liste de groupes de réseau externe.

7. Procédé selon la revendication 1, comprenant en outre, avant d'envoyer la liste de groupes à interroger à l'utilisateur, les étapes suivantes :
acquérir une liste de groupes de réseau domestique ; et
fusionner la liste de groupes de réseau domestique avec la liste de groupes de réseau externe dans la liste de groupes à interroger.

8. Dispositif de traitement de correspondance basé sur un système RCS en interfonctionnement, **caractérisé en ce que** le système comprend :
un module de traitement de données configuré pour déterminer qu'un utilisateur d'un système RCS de réseau domestique accepte de rejoindre un groupe de discussion de réseau externe d'un système RCS de réseau externe, où le nom de domaine d'un réseau où se trouve le groupe de discussion de réseau externe n'est pas cohérent avec le nom de domaine du réseau où se trouve l'utilisateur ; et
un module de stockage configuré pour stocker la correspondance entre l'utilisateur et le groupe de discussion de réseau externe.

9. Support de stockage lisible par ordinateur sur lequel est stocké un programme de traitement de correspondance basé sur un système RCS en interfonctionnement, **caractérisé en ce que**, lorsque le programme de traitement de correspondance basé sur un système RCS en interfonctionnement est exécuté par un processeur, les étapes du procédé de traitement de liste de groupes de l'une quelconque des revendications 1 à 7 sont exécutées.

10. Processeur configuré pour exécuter un programme stocké sur le support de stockage lisible par ordinateur selon la revendication 9, **caractérisé en ce que** le procédé de l'une quelconque des revendications 1 à 7 est exécuté lorsque le programme s'exécute.
